# EUROPEAN PATENT APPLICATION

(11) **EP 4 806 772 A1**
(43) Date of publication of application: **16.09.2026**
(21) Application number: 26157128.5
(22) Date of filing: 09.02.2026
(51) Int. Cl.: B62J 17/06, B62J 17/10

(54) **SADDLED VEHICLE**

(30) Priority: 14.03.2025 JP 2025041019
(71) Applicant: Honda Motor Co., Ltd., Toyko 105-8404 (JP)
(72) Inventor: ITO, Shinji, Tokyo, 105-8404 (JP); KAMIYA, Keishiro, Saitama, 351-0193 (JP); ARAI, Keisuke, Saitama, 351-0193 (JP); IWASAKA, Saiki, Tokyo, 105-8404 (JP); NOMURA, Kensei, Tokyo, 105-8404 (JP); GATO, Takumi, Tokyo, 110-0005 (JP)
(74) Representative: Weickmann & Weickmann PartmbB

(57) **Abstract**

Provided is a saddled vehicle that achieves both improved drivability and occupant comfort by streamlining airflow to be released from leg shields. A saddled vehicle (1) includes: a front wheel (WF); leg shields (40) each provided on a side portion of a vehicle body at a position above and rearward of the front wheel (WF); and air release ports (50) configured to release vehicle-induced airflow (W) introduced into the inside of the leg shields (40). Each of the leg shields (40) includes a streamlining plate (60) extending along an edge of a corresponding one of the air release ports (50) at a position inward of the air release port (50) in a vehicle width direction. Each of the leg shields (40) includes a base cowl (41) and an outer cover (42) mounted on an outer side of the base cowl (41) in the vehicle width direction. The streamlining plates (60) are provided on the respective base cowls (41). The air release ports (50) are provided in the respective outer covers (42).

## Description

### BACKGROUND OF THE INVENTION

### Field of the Invention

The present invention relates to a saddled vehicle, and more particularly, to a saddled vehicle having leg shields as exterior components configured to face an occupant's legs and cover side portions of the vehicle body that are located toward the front.

### Related Art

A saddled vehicle is known in the conventional art that has leg shields as exterior components configured to face an occupant's legs and cover side portions of the vehicle body that are located toward the front.

Japanese Unexamined Patent Application, Publication No. 2012-240522 discloses a motorcycle having a pair of left and right leg shields provided at positions above and rearward of a front wheel, and extending rearward and downward, continuous with a lower edge of a headlight. In this motorcycle, each of the leg shields is provided with an air release port at a position toward the top to actively release vehicle-induced airflow introduced into the inside of the leg shields, thereby reducing air resistance due to the vehicle-induced airflow and improving tire-ground contact pressure.

Patent Document 1: Japanese Unexamined Patent Application, Publication No. 2012-240522

### SUMMARY OF THE INVENTION

In the configuration disclosed in Japanese Unexamined Patent Application, Publication No. 2012-240522, the vehicle-induced airflow introduced into the inside of the leg shields is released directly through the air release ports, enhancing straight-line travel stability of the vehicle. However, the vehicle-induced airflow released through the air release ports can hit the occupant's legs, potentially reducing riding comfort.

An object of the present invention is to provide a saddled vehicle that solves the problems of the conventional art, and achieves both improved drivability and occupant comfort by incorporating a structure that streamlines airflow to be released from leg shields.

In order to achieve the object described above, the present invention provides a saddled vehicle (1). A first feature of the present invention is that the saddled vehicle (1) includes: a front wheel (WF); leg shields (40) each provided on a side portion of a vehicle body at a position above and rearward of the front wheel (WF); and air release ports (50) configured to release vehicle-induced airflow (W) introduced into the inside of the leg shields (40), each of the leg shields (40) including a streamlining plate (60) extending along an edge of a corresponding one of the air release ports (50) at a position inward of the air release port (50) in a vehicle width direction.

A second feature is as follows. Each of the leg shields (40) includes a base cowl (41) and an outer cover (42) mounted on an outer side of the base cowl (41) in the vehicle width direction. The streamlining plates (60) are provided on the respective base cowls (41), and the air release ports (50) are provided in the respective outer covers (42).

A third feature is as follows. Each of the streamlining plates (60) includes an upper wall (60a) extending in a front-rear direction and extending inward in the vehicle width direction from an upper edge of the corresponding air release port (50), a side wall (60b) extending downward from an end of the upper wall (60a), and a lower wall (60c) extending outward in the vehicle width direction from an end of the side wall (60b). An end of the lower wall (60c) and a corresponding one of the base cowls (41) are spaced apart from each other. A front end (60f) of each streamlining plate (60) extends further forward than a front end (50f) of the corresponding air release port (50), and a rear end (60r) of each streamlining plate (60) extends further rearward than a rear end (50r) of the corresponding air release port (50).

A fourth feature is as follows. The saddled vehicle (1) further includes a lower fender (27) located inward of the base cowls (41) in the vehicle width direction and covering a rear portion of the front wheel (WF). The lower fender (27) has air introduction ports (28) through which the vehicle-induced airflow (W) is introduced into the inside of the leg shields (40). Each of the air release ports (50) is provided at a position above and forward of the air introduction ports (28) in a side view of the vehicle body. Each of the streamlining plates (60) and the lower fender (27) are spaced apart from each other in the vehicle width direction.

A fifth feature is as follows. An upper surface (90) of each outer cover (42) has a recess (80) recessed inward in the vehicle width direction. Each of the air release ports (50) is formed in a corresponding one of the recesses (80) and has an elongated shape inclined downward toward the rear in a side view of the vehicle body. Each of the air release ports (50) is provided at a position overlapping with the corresponding base cowl (41) in a plan view of the vehicle body.

A sixth feature is as follows. Each of the recesses (80) has a trapezoidal shape defined by four edges including a front edge (80f), a rear edge (80r) longer than the front edge (80f), an inner edge (80u) in the vehicle width direction, and an outer edge (80s) in the vehicle width direction. Each of the air release ports (50) is provided at a position toward a corresponding one of the inner edges (80u) in the vehicle width direction and has an elongated shape extending in a front-rear direction.

A seventh feature is as follows. The saddled vehicle (1) further includes an electrical component (70) provided inside one of the leg shields (40) at a position rearward of the lower fender (27) in a side view of the vehicle body. At least a portion of the electrical component (70) overlaps with the air release ports (50) in a side view of the vehicle body.

An eighth feature is as follows. An upper surface (90) of each outer cover (42) includes a front upper surface (51), which is inclined downward toward the rear in a side view of the vehicle body, and a rear upper surface (52), which is connected to a rear end of the front upper surface (51) and extends rearward. Each of the base cowls (41) has an inclined surface (62) that faces the front upper surface (51) and the rear upper surface (52) of a corresponding one of the outer covers (42) at a predetermined angle.

According to the first feature, the saddled vehicle (1) includes: a front wheel (WF); leg shields (40) each provided on a side portion of a vehicle body at a position above and rearward of the front wheel (WF); and air release ports (50) configured to release vehicle-induced airflow (W) introduced into the inside of the leg shields (40), each of the leg shields (40) including a streamlining plate (60) extending along an edge of a corresponding one of the air release ports (50) at a position inward of the air release port (50) in a vehicle width direction. With the streamlining plates extending along the edges of the air release ports, the vehicle-induced airflow flowing toward the air release ports is released after changing direction by hitting the streamlining plates, and then flowing around the streamlining plates. This configuration therefore makes it possible to suitably control the amount of airflow to be released through the air release ports as compared to a configuration having no streamlining plates, improving the drivability during travel while reducing the amount of released airflow that hits the occupant's legs.

According to the second feature, each of the leg shields (40) includes a base cowl (41) and an outer cover (42) mounted on an outer side of the base cowl (41) in the vehicle width direction, the streamlining plates (60) are provided on the respective base cowls (41), and the air release ports (50) are provided in the respective outer covers (42). This configuration makes it possible to suitably control the amount of airflow to be released through the air release ports as compared to a configuration having no streamlining plates, improving the drivability during travel while reducing the amount of released airflow that hits the occupant's legs.

According to the third feature, each of the streamlining plates (60) includes an upper wall (60a) extending in a front-rear direction and extending inward in the vehicle width direction from an upper edge of the corresponding air release port (50), a side wall (60b) extending downward from an end of the upper wall (60a), and a lower wall (60c) extending outward in the vehicle width direction from an end of the side wall (60b), an end of the lower wall (60c) and a corresponding one of the base cowls (41) are spaced apart from each other, a front end (60f) of each streamlining plate (60) extends further forward than a front end (50f) of the corresponding air release port (50), and a rear end (60r) of each streamlining plate (60) extends further rearward than a rear end (50r) of the corresponding air release port (50). This configuration makes it possible to suitably adjust the amount of airflow to be released through the air release ports, because each streamlining plate directs the vehicle-induced airflow outward in the vehicle width direction, and then directs the vehicle-induced airflow to the corresponding air release port through a gap formed between an inner surface of the corresponding outer cover and an end of the lower wall of the streamlining plate. This configuration also makes it possible to achieve an intended streamlining effect, because the upper wall extending from the upper edge of each air release port blocks the vehicle-induced airflow coming from above. Furthermore, each of the streamlining plates has a shape that covers the corresponding air release port from the inside in the vehicle width direction. This configuration therefore allows the inside of the cowls and functional components such as an electrical component described below to be less visible from outside each air release port, thereby improving the appearance of the saddled vehicle.

According to the fourth feature, the saddled vehicle (1) further includes a lower fender (27) located inward of the base cowls (41) in the vehicle width direction and covering a rear portion of the front wheel (WF), the lower fender (27) has air introduction ports (28) through which the vehicle-induced airflow (W) is introduced into the inside of the leg shields (40), each of the air release ports (50) is provided at a position above and forward of the air introduction ports (28) in a side view of the vehicle body, and each of the streamlining plates (60) and the lower fender (27) are spaced apart from each other in the vehicle width direction. Thus, the vehicle-induced airflow introduced through the air introduction ports is directed to each air release port located above and forward of the air introduction ports. This configuration makes it possible to stabilize the flow of vehicle-induced airflow inside the leg shields and suitably adjust the amount of airflow to be released through the air release ports using the streamlining plates. Consequently, the intended release amount can be achieved.

According to the fifth feature, an upper surface (90) of each outer cover (42) has a recess (80) recessed inward in the vehicle width direction, each of the air release ports (50) is formed in a corresponding one of the recesses (80) and has an elongated shape inclined downward toward the rear in a side view of the vehicle body, and each of the air release ports (50) is provided at a position overlapping with the corresponding base cowl (41) in a plan view of the vehicle body. Since the air release ports are formed in the recesses, and each air release port is provided at a position overlapping with the base cowl in a plan view of the vehicle body, this configuration allows the air release ports to be less visible from the outside, thereby improving the appearance of the saddled vehicle. Furthermore, since each air release port has an elongated shape inclined downward toward the rear in a side view of the vehicle body, this configuration enables the airflow released through each air release port to smoothly flow rearward.

According to the sixth feature, each of the recesses (80) has a trapezoidal shape defined by four edges including a front edge (80f), a rear edge (80r) longer than the front edge (80f), an inner edge (80u) in the vehicle width direction, and an outer edge (80s) in the vehicle width direction, and each of the air release ports (50) is provided at a position toward a corresponding one of the inner edges (80u) in the vehicle width direction and has an elongated shape extending in a front-rear direction. Since each recess has a trapezoidal shape having the rear edge longer than the front edge, this configuration enables the airflow released through each air release port to smoothly flow rearward. Since each air release port has an elongated shape, this configuration ensures a sufficient air release port area. Besides, since each air release port is provided at a position toward the inner edge in the vehicle width direction, this configuration allows the air release ports to be even less visible from the outside.

According to the seventh feature, the saddled vehicle (1) further includes an electrical component (70) provided inside one of the leg shields (40) at a position rearward of the lower fender (27) in a side view of the vehicle body, and at least a portion of the electrical component (70) overlaps with the air release ports (50) in a side view of the vehicle body. This configuration allows the electrical component, which is a heat-generating component, to be located on an air release path of the vehicle-induced airflow, and thus effectively cooled.

According to the eighth feature, an upper surface (90) of each outer cover (42) includes a front upper surface (51), which is inclined downward toward the rear in a side view of the vehicle body, and a rear upper surface (52), which is connected to a rear end of the front upper surface (51) and extends rearward, and each of the base cowls (41) has an inclined surface (62) that faces the front upper surface (51) and the rear upper surface (52) of a corresponding one of the outer covers (42) at a predetermined angle. This configuration enables the released airflow to easily flow between the upper surface of each outer cover and the inclined surface of the corresponding base cowl, thereby further enhancing the effect of streamlining the vehicle-induced airflow.

### BRIEF DESCRIPTION OF THE DRAWINGS

FIG. 1 is a left side view of a motorcycle according to an embodiment of the present invention;
FIG. 2 is a front view of the motorcycle with a front wheel and front forks removed;
FIG. 3 is a partially enlarged left side view of the motorcycle;
FIG. 4 is a left side view of an outer cover on the left side in the vehicle width direction;
FIG. 5 is a partially enlarged perspective view of the motorcycle as seen from the left rear and above;
FIG. 6 is a cross-sectional view taken along line VI-VI in FIG. 3;
FIG. 7 is a perspective view of a base cowl on the left side in the vehicle width direction;
FIG. 8 is a cross-sectional view taken along line VIII-VIII in FIG. 3;
FIG. 9 is a cross-sectional view taken along line IX-IX in FIG. 3;
FIG. 10 is a cross-sectional view taken along line X-X in FIG. 3;
FIG. 11 is a cross-sectional view taken along line XI-XI in FIG. 3;
FIG. 12 is a perspective view of the outer cover mounted on the base cowl;
FIG. 13 is a partially enlarged right side view of the motorcycle with a leg shield removed;
FIG. 14 is a front view showing a structure of a head pipe and other components therearound; and
FIG. 15 is an explanatory diagram showing the flow of vehicle-induced airflow till the release thereof through air release ports.

### DETAILED DESCRIPTION OF THE INVENTION

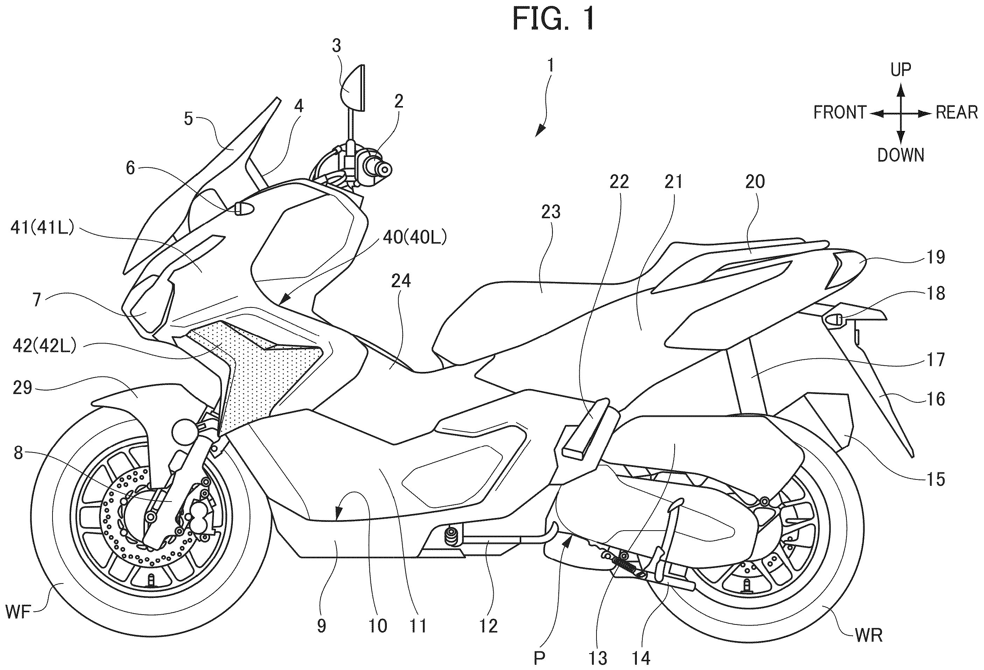

The following describes a preferred embodiment of the present invention in detail with reference to the accompanying drawings. FIG. 1 is a left side view of a motorcycle 1 according to an embodiment of the present invention. The motorcycle 1 is a scooter-type saddled vehicle including a pair of left and right low-mounted footrests 10 provided between a steering handlebar 2 and a seat 23. A pair of left and right front forks 8, which rotatably support a front wheel WF, are steerably supported on a vehicle frame, not shown. A rearview mirror 3 is mounted on the steering handlebar 2 for steering the front wheel WF, and a front fender 29 that covers an upper portion of the front wheel WF is mounted on the front forks 8.

An instrument cluster 4 and a windscreen 5 are provided in front of the steering handlebar 2. A pair of left and right leg shields 40 (40L and 40R; indicated by dotted hatching in FIG. 1) that cover side portions of the vehicle body are provided at positions below and forward of the steering handlebar 2, and above and rearward of the front wheel WF. The leg shields 40, which are made of rigid synthetic resin or the like, include base cowls 41 (41L and 41R) having an opening formed to expose a headlight 7 facing forward and outer covers 42 (42L and 42R) mounted on the outer sides of the base cowls 41 in the vehicle width direction. A pair of left and right front turn signal lamps 6 are mounted at positions toward the top of the base cowls 41.

A straddle member 24 is connected to rear portions of the leg shields 40. A pair of left and right side panels 11 that form the low-mounted footrests 10 are connected to lower portions of the leg shields 40 and the straddle member 24. Under cowls 9 are connected to outer ends of the low-mounted footrests 10 in the vehicle width direction. A side stand 12, which is supported on the vehicle frame, is provided in a cutout formed in the under cowl 9 on the left side in the vehicle width direction. A pair of left and right passenger footrests 22 are provided at positions above and rearward of the side stand 12.

A unit-swing type power unit P obtained by integrating an internal combustion engine with a continuously variable transmission is provided rearward of the under cowls 9. The power unit P is suspended from the vehicle frame using a rear cushion 17 and supported so as to be swingable in the up-down direction relative to the vehicle frame. A rear wheel WR, which is a drive wheel, is rotatably supported on a rear end of the power unit P. Combustion gas from the power unit P is discharged from a muffler 15 provided on the right side in the vehicle width direction. An air cleaner box 13 is mounted on an upper portion of the power unit P. A center stand 14 is mounted on a lower portion of the power unit P.

A pair of left and right rear cowls 21 are connected to a rear portion of the straddle member 24. The seat 23 and a rear grip 20 are provided on upper portions of the rear cowls 21. A tail light device 19 is mounted on a rear end of the rear cowl 21. A rear fender 16 is provided below the tail light device 19. The rear fender 16 covers an upper rear portion of the rear wheel WR and supports rear turn signal lamps 18.

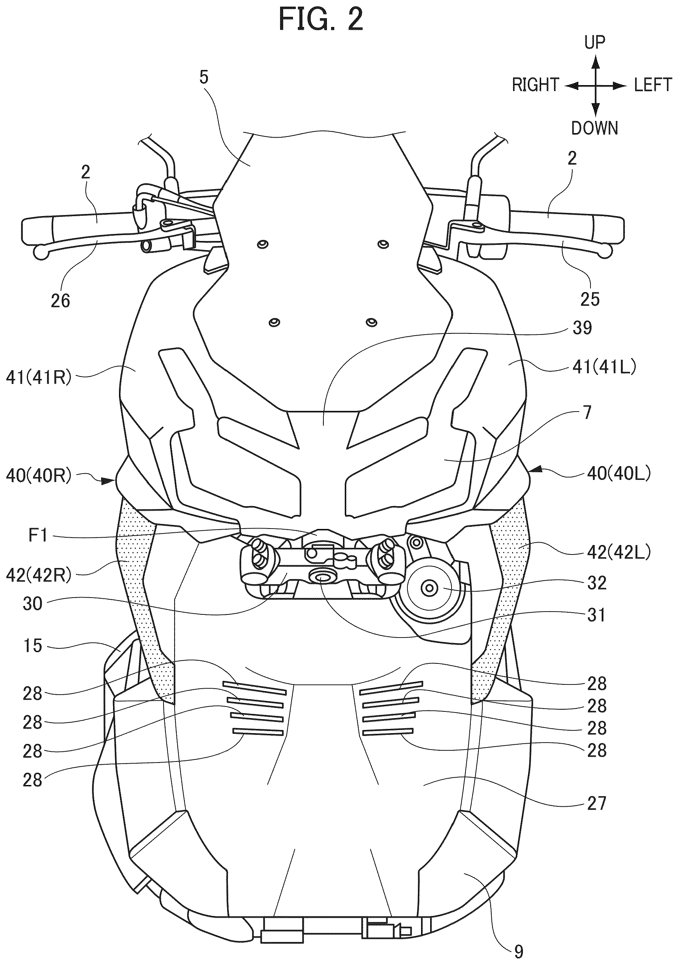

FIG. 2 is a front view of the motorcycle 1 with the front wheel WF and the front forks 8 removed. The same reference numerals as mentioned above indicate the same or equivalent elements. A central portion of the headlight 7 is covered by a front center cowl 39. A head pipe F1 is connected to a front end of the vehicle frame, rotatably supporting a steering stem 31. A bottom bridge 30, which supports the pair of left and right front forks 8, is fixed to a lower end of the steering stem 31. A front wheel brake lever 26 is swingably supported on the right side of the steering handlebar 2 in the vehicle width direction. A rear wheel brake lever 25 is swingably supported on the left side of the steering handlebar 2 in the vehicle width direction.

A lower fender 27 that covers a rear portion of the front wheel WF is connected to the inner sides of the base cowls 41 in the vehicle width direction. The under cowls 9 are connected to a lower edge of the lower fender 27. The lower fender 27, which is made of rigid synthetic resin or the like, has air introduction ports 28 through which vehicle-induced airflow from the front is introduced into the inside of the leg shields 40. In the present embodiment, a plurality of air introduction ports 28 are provided on both the left and right sides of the lower fender 27 with the head pipe F1 as the center. The air introduction ports 28 each have a rectangular shape elongated in the vehicle width direction and are arranged so that the width thereof gradually increases toward the top in the vehicle height direction. It should be noted that the shape and the number of air introduction ports 28 can be selected as desired. A horn 32 is contained in a cutout formed in an upper portion of the left side of the lower fender 27 in the vehicle width direction.

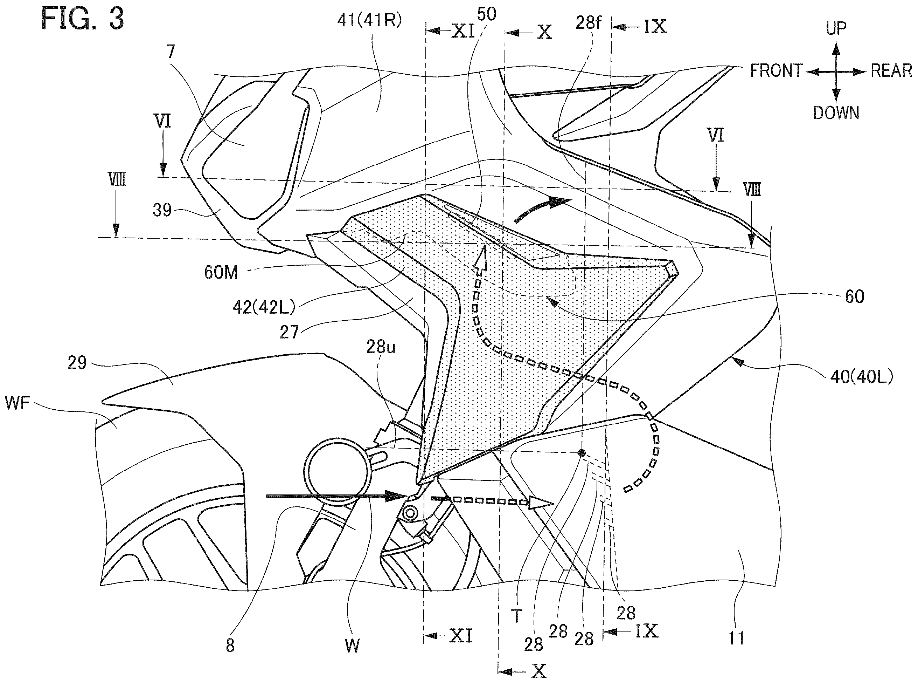

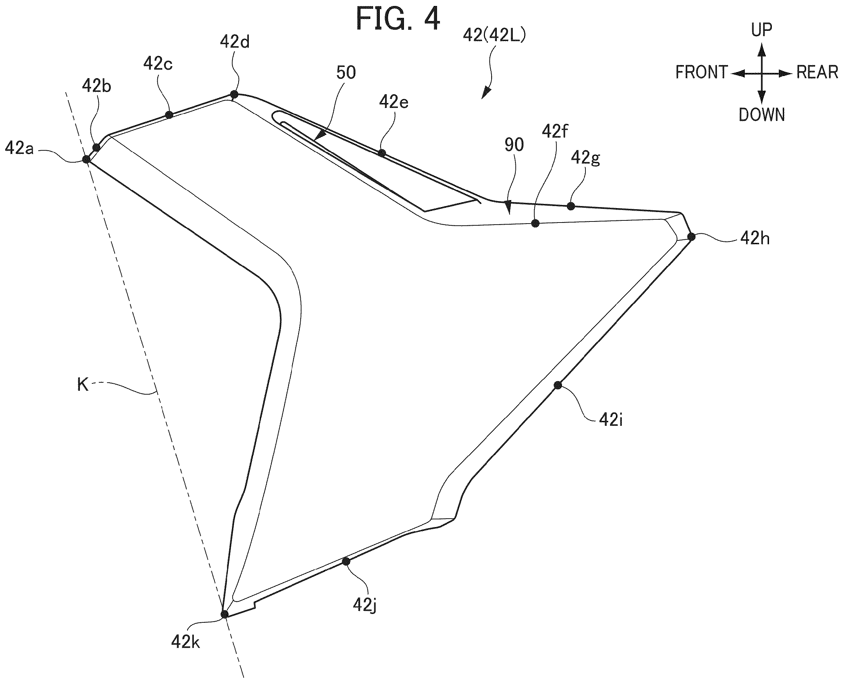

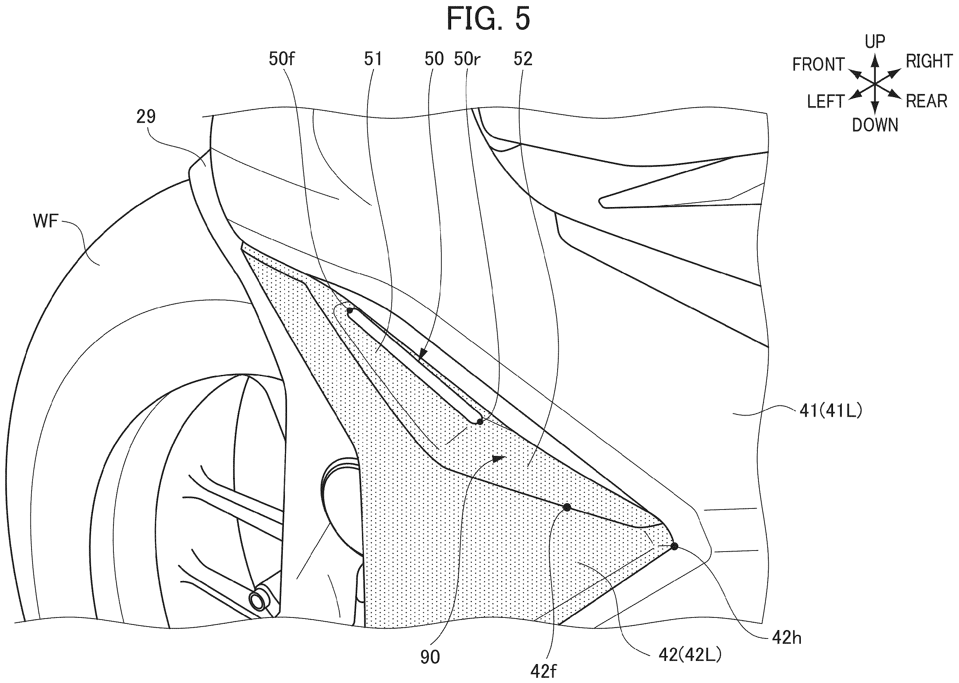

FIG. 3 is a partially enlarged left side view of the motorcycle 1. FIG. 4 is a left side view of the outer cover 42 on the left side in the vehicle width direction. FIG. 5 is a partially enlarged perspective view of the motorcycle 1 as seen from the left rear and above. The same reference numerals as mentioned above indicate the same or equivalent elements. An air release port 50 is formed in an upper surface of each of the pair of left and right outer covers 42 to release vehicle-induced airflow introduced into the inside of the corresponding leg shield 40. Thus, an air release path through which vehicle-induced airflow introduced through the air introduction ports 28 and passing through the inside of the leg shield 40 is released through the air release port 50. The upper surface, which is denoted by reference numeral 90, of each outer cover 42 is provided in an upper portion and oriented upward. The upper surface 90 includes a front upper surface 51, which is inclined downward toward the rear in a side view of the vehicle body, and a rear upper surface 52, which is connected to a rear end of the front upper surface 51 and extends rearward. The air release port 50 is provided in the front upper surface 51 at a position toward the inner side in the vehicle width direction. The air release port 50 has an elongated hole shape extending from a front end 50f to a rear end 50r and is inclined downward toward the rear.

As shown in FIG. 4, the outer cover 42 has a shape in which a front portion has a cutout extending rearward in a side view. Specifically, the outer cover 42 has a substantially triangular shape including a front end 42a, a rear end 42h, and a lower end 42k. More specifically, the upper portion of the outer cover 42 includes: a front upper edge 42b extending rearward and upward from the front end 42a; an upper first edge 42c extending further rearward toward an upper end 42d, continuous with the front upper edge 42b; an upper second edge 42e extending rearward and downward from the upper end 42d; and an upper third edge 42g extending rearward toward the rear end 42h, continuous with the upper second edge 42e. A lower portion of the outer cover 42 includes: a lower first edge 42j extending rearward and upward from the lower end 42k; and a lower second edge 42i extending rearward and upward toward the rear end 42h, continuous with the lower first edge 42j. The front portion of the outer cover 42 has a shape of a cutout extending rearward from an imaginary line K connecting the front end 42a and the lower end 42k. Furthermore, the shape of the outer cover 42 curves outward in the vehicle width direction in a plan view. The air release port 50 is provided in the upper surface 90 formed between the upper second edge 42e, the upper third edge 42g, and a ridge 42f.

Referring to FIG. 3, a streamlining plate 60 is provided inward of the air release port 50 in the vehicle width direction. The streamlining plate 60 extends inward in the vehicle width direction from an inner surface of the base cowl 41, and then curves downward to cover the air release port 50 from the inside in the vehicle width direction. A body of the streamlining plate 60 has a shape inclined downward toward the rear in a side view. The body of the streamlining plate 60 includes, at the front, a front portion 60M having a shape inclined downward toward the front. The air release port 50 is provided at a position above and forward of the air introduction ports 28 in a side view of the vehicle body. The streamlining plate 60 and the lower fender 27 are spaced apart from each other in the vehicle width direction. More specifically, the air release port 50 is provided at a position above an upper end position 28u in the vehicle height direction and forward of a front end position 28f in the vehicle front-rear direction based on a front end T of the air introduction port 28 located at the uppermost position. A portion of the vehicle-induced airflow W introduced through the air introduction ports 28 flows upward in the vehicle height direction through the inside of the leg shield 40. The vehicle-induced airflow W flowing upward in the vehicle height direction passes through the air release path between the base cowl 41 and the lower fender 27, and is directed to the air release port 50. Thus, the vehicle-induced airflow W introduced through the air introduction ports 28 is directed to each air release port 50 located above and forward of the air introduction ports 28. This configuration makes it possible to stabilize the flow of vehicle-induced airflow inside the leg shields 40 and release a suitably adjusted amount of trapped vehicle-induced airflow through the air release ports. Consequently, the intended release amount can be achieved, improving the drivability of the vehicle.

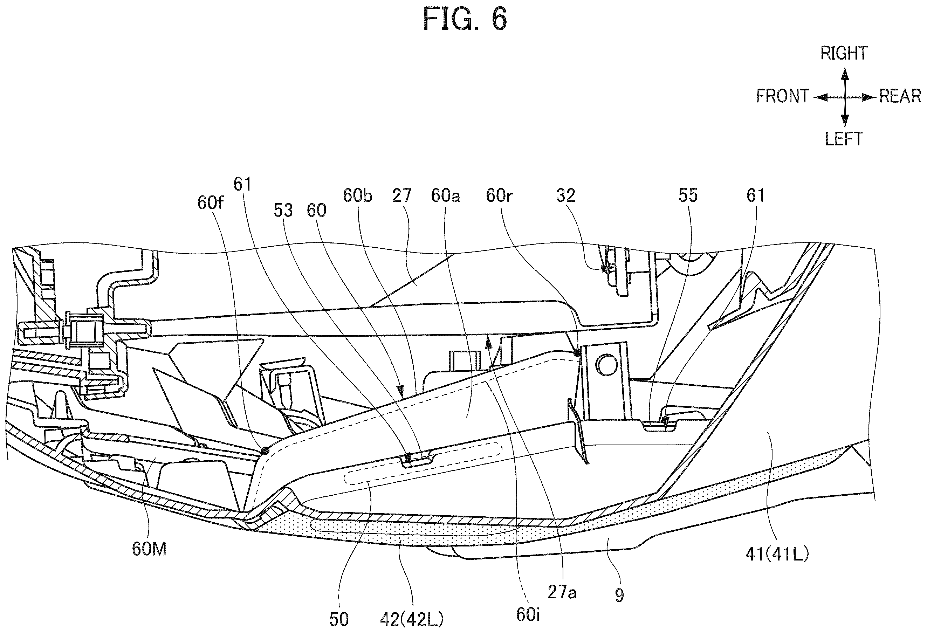

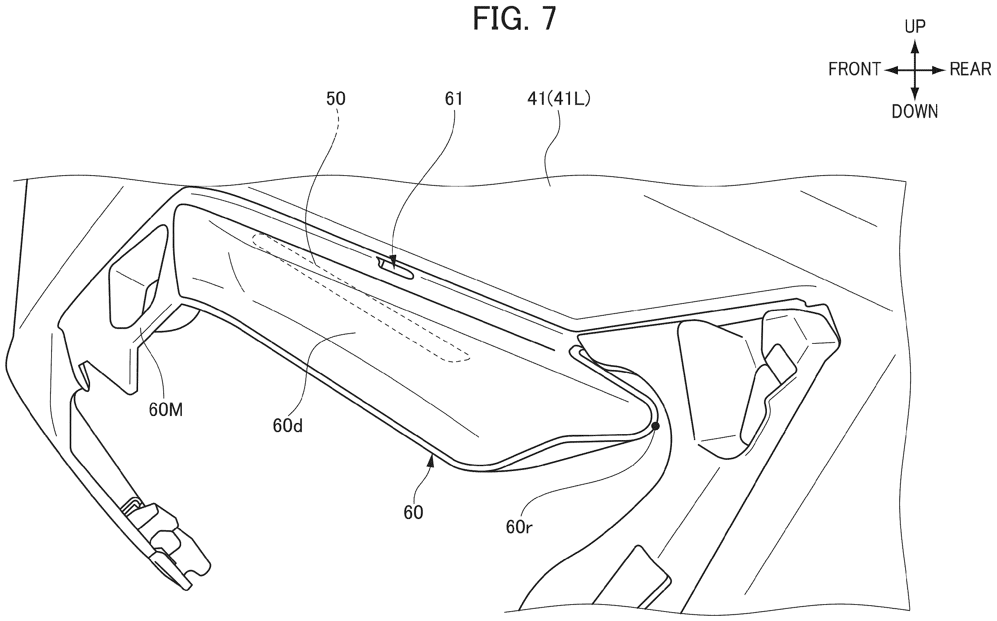

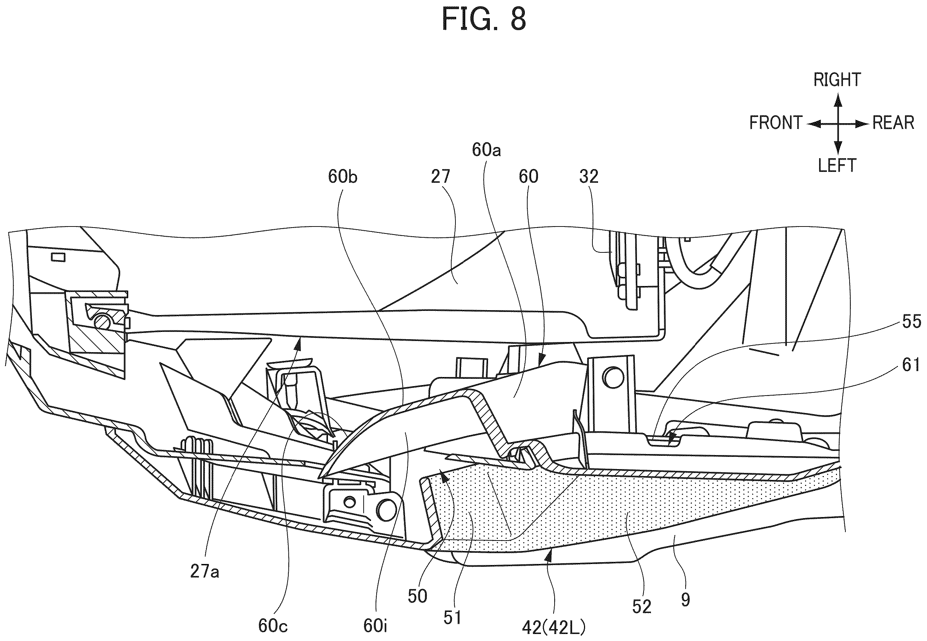

FIG. 6 is a cross-sectional view taken along line VI-VI in FIG. 3. FIG. 7 is a perspective view of the base cowl 41L on the left side in the vehicle width direction. FIG. 8 is a cross-sectional view taken along line VIII-VIII in FIG. 3. The same reference numerals as mentioned above indicate the same or equivalent elements. In a plan view of the vehicle body, the air release port 50 is inclined so that the rear side thereof is located further inward in the vehicle width direction than the front side thereof. The streamlining plate 60 is provided inward of the air release port 50 in the vehicle width direction. The streamlining plate 60 extends inward in the vehicle width direction from the inner surface of the base cowl 41, and then curves downward to cover the air release port 50 from the inside in the vehicle width direction. The streamlining plate 60 is provided outward of a side wall 27a of the lower fender 27 in the vehicle width direction. The front portion 60M, which has a boss for mounting the outer cover 42, is connected to the front of the body of the streamlining plate 60. The streamlining plate 60 includes an upper wall 60a extending in the front-rear direction and extending inward in the vehicle width direction from an upper edge of the air release port 50, a side wall 60b extending downward from an end of the upper wall 60a, and a lower wall 60c extending outward in the vehicle width direction from an end of the side wall 60b. This configuration allows an inner surface 60i of each streamlining plate 60 to be visible from outside each air release port 50, and the inside of the base cowls and functional components such as an electrical component described below to be less visible from outside each air release port, thereby improving the appearance of the motorcycle 1.

A front end 60f of the streamlining plate 60 extends further forward than the front end 50f of the air release port 50. A rear end 60r of the streamlining plate 60 extends further rearward than the rear end 50r of the air release port 50. An outer end of the lower wall 60c of the streamlining plate 60 in the vehicle width direction is spaced apart from the inner surface of the base cowl 41, forming a gap therebetween through which the vehicle-induced airflow W is introduced. Furthermore, the air release path is formed between the side wall of the streamlining plate and the side wall of the lower fender, through which the vehicle-induced airflow W introduced through the air introduction ports 28 passes. The upper wall 60a of the streamlining plate 60 extends inward in the vehicle width direction from the base cowl 41. The vehicle-induced airflow W coming from above is therefore blocked by the upper wall 60a. This configuration eliminates the need for streamlining plates formed separately from other components, avoiding an increase in the number of components. Besides, because of the streamlining plates extending along the edges of the air release ports, this configuration makes it possible to suitably control the amount of airflow to be released through the air release ports as compared to a configuration having no streamlining plates, improving the drivability during travel while reducing the amount of released airflow that hits the occupant's legs. An upper portion of each streamlining plate 60 is provided with two engagement holes 61 for engagement with engagement claws 53 and 55 formed on the corresponding outer cover 42.

The configuration of the streamlining plates 60 according to the present embodiment makes it possible to suitably adjust the amount of airflow to be released through the air release ports 50, because each streamlining plate 60 initially blocks the flow of the vehicle-induced airflow W introduced through the air introduction ports 28 by directing the vehicle-induced airflow W outward in the vehicle width direction, and then directing the vehicle-induced airflow W to the corresponding air release port 50 through a gap formed between an inner surface of the corresponding outer cover 42 and an end of the lower wall 60c of the streamlining plate 60. This configuration also makes it possible to achieve an intended streamlining effect, because the upper wall 60a extending from the upper edge of each air release port 50 blocks the vehicle-induced airflow coming from above.

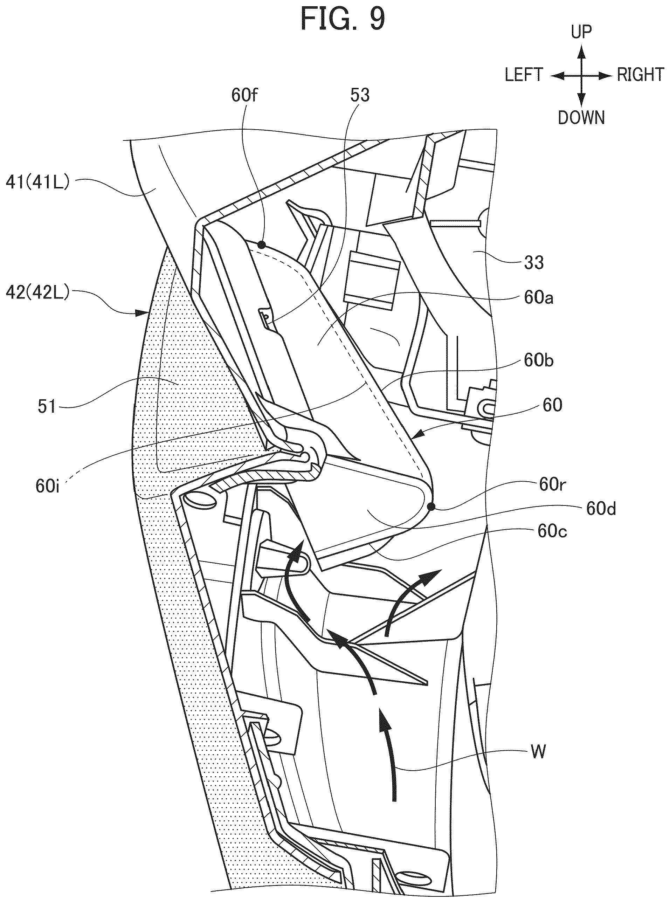

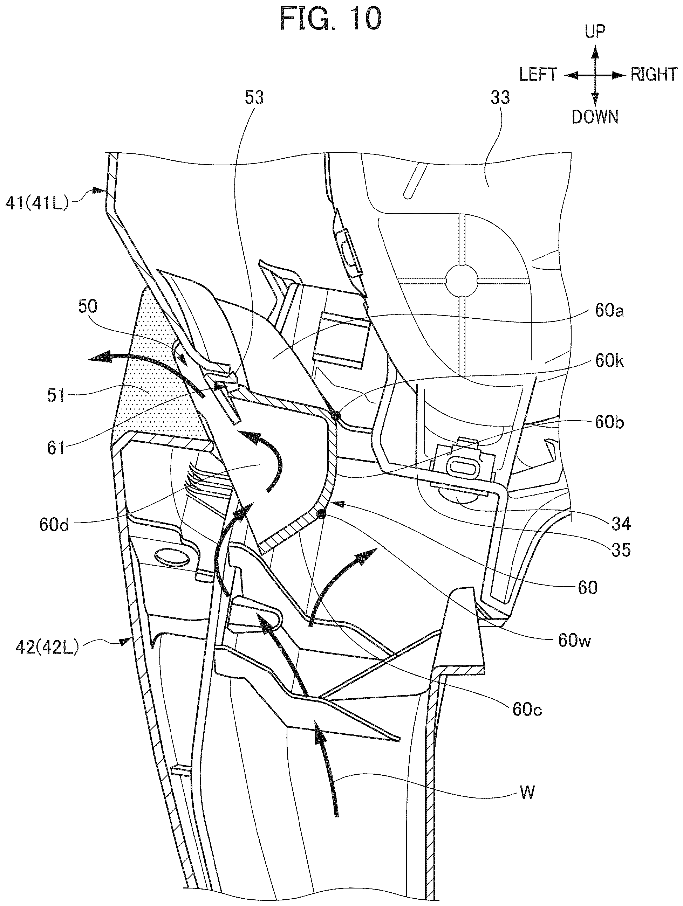

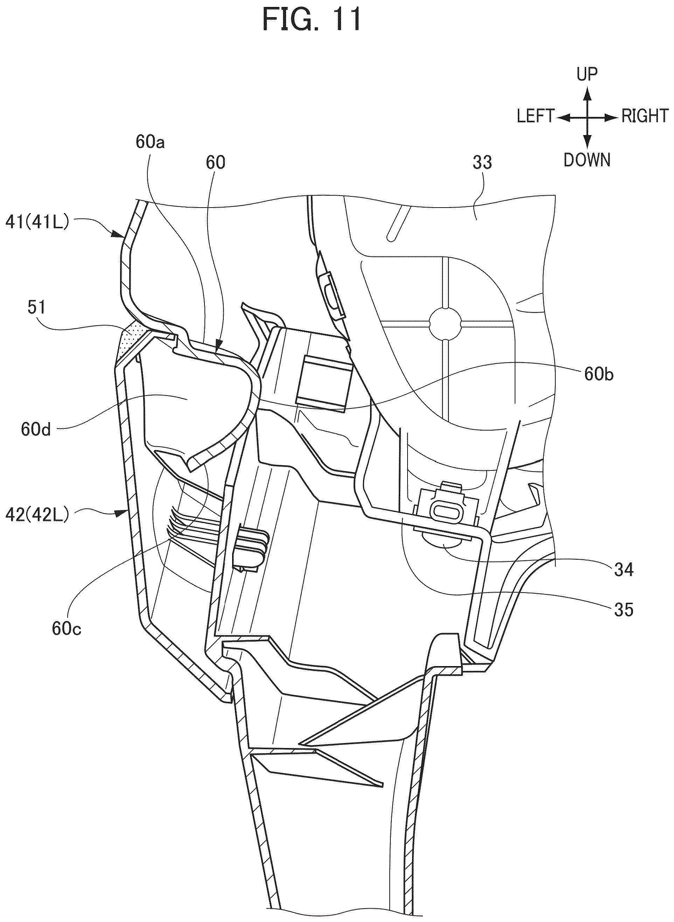

FIG. 9 is a cross-sectional view taken along line IX-IX in FIG. 3. FIG. 10 is a cross-sectional view taken along line X-X in FIG. 3. FIG. 11 is a cross-sectional view taken along line XI-XI in FIG. 3. The same reference numerals as mentioned above indicate the same or equivalent elements. The streamlining plate 60 includes a bottom wall 60d surrounded by the upper wall 60a, the side wall 60b, and the lower wall 60c, and has a substantially U-shaped cross section. More specifically, the upper wall 60a substantially horizontally extends inward in the vehicle width direction from the inner surface of the base cowl 41, and then bends at a bent portion 60k. The side wall 60b extends downward in the vehicle height direction. The lower wall 60c continues from the side wall 60b with a curved surface 60w therebetween and extends outward in the vehicle width direction. The lower wall 60c is located downward of the air release port 50 in the vehicle height direction in a cross-sectional view and inward of the air release port 50 in the vehicle width direction. Furthermore, the streamlining plate 60 is formed so that, from the rear end 60r toward the front, the streamlining plate 60 is inclined outward in the vehicle width direction in a plan view, bends at the bent portion 60k, and further extends outward in the vehicle width direction. The front end 60f is formed integrally with the inner surface of the base cowl 41 so as to block an area forward of the air release port 50. That is, since the front end 60f of the streamlining plate 60 covers the area forward of the air release port 50, the vehicle-induced airflow W introduced through the air introduction ports 28 is prevented from being introduced into the inside of the streamlining plate 60 from a location forward of the streamlining plate 60. In this embodiment, the bent portion 60k is located outward of the rear end 60r of the streamlining plate 60 in the vehicle width direction. However, the bent portion 60k is not limited as such. For example, the bent portion 60k may be located inward of the rear end 60r in the vehicle width direction or at the same position as the rear end 60r in the vehicle width direction. Furthermore, a housing 33 of the headlight 7 is supported on the base cowls 41 at a position toward the front using mounting stays 35 and fastening members 34.

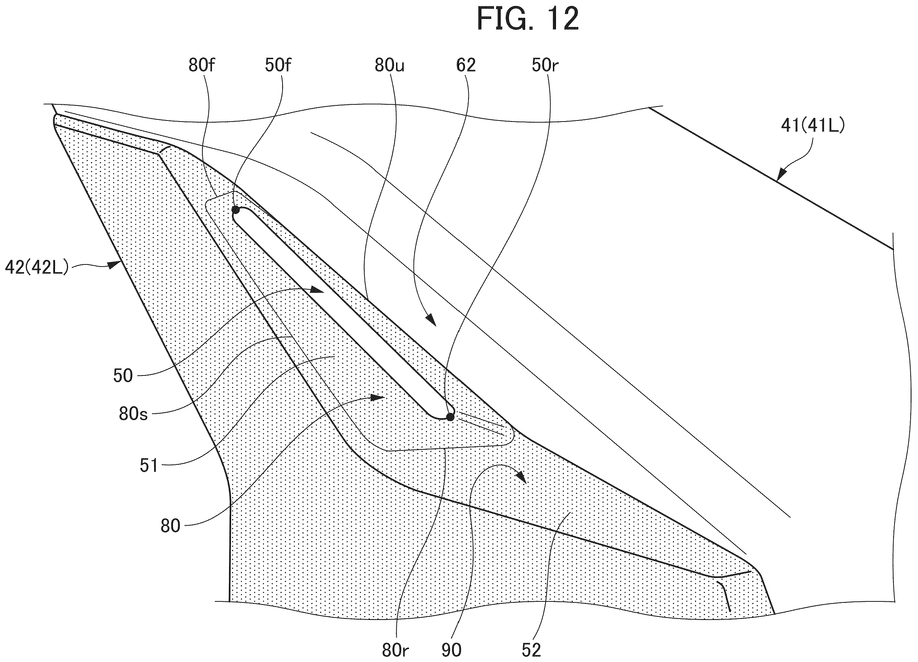

FIG. 12 is a perspective view of the outer cover 42 mounted on the base cowl 41. The same reference numerals as mentioned above indicate the same or equivalent elements. As described above, the outer cover 42 has the upper surface 90 including the front upper surface 51, which is inclined downward toward the rear in a side view of the vehicle body, and the rear upper surface 52, which is connected to the rear end of the front upper surface 51 and extends rearward. Furthermore, the front upper surface 51 has a recess 80 recessed inward in the vehicle width direction, and the air release port 50 is formed in the recess 80.

The recess 80 has a trapezoidal shape defined by four edges including a front edge 80f, a rear edge 80r longer than the front edge 80f, an inner edge 80u in the vehicle width direction, and an outer edge 80s in the vehicle width direction. The inner edge 80u in the vehicle width direction extends along the upper second edge 42e and the upper third edge 42g of the outer cover 42. The outer edge 80s in the vehicle width direction extends along the upper surface 90 and the ridge 42f of the outer cover 42. The width of the recess 80 between the outer edge 80s and the inner edge 80u in the vehicle width direction increases toward the rear in the front-rear direction in a top view of the vehicle body. Furthermore, the outer edge 80s extends diagonally downward toward the rear in the front-rear direction in a side view of the vehicle body. Since each recess 80 has a trapezoidal shape having a width dimension increasing toward the rear, this configuration enables the airflow released through each air release port 50 to smoothly flow rearward.

The air release port 50 is provided at a position toward the inner edge 80u in the vehicle width direction and has an elongated hole shape extending in the front-rear direction. The air release port 50 is provided downward of the upper second edge 42e at a position overlapping with the ridge 42f in a side view of the vehicle body. Furthermore, the air release port 50 is provided at a position overlapping with the base cowl 41 in a plan view of the vehicle body. This configuration allows the air release ports 50 to be less visible from the outside, thereby improving the appearance of the motorcycle 1. Furthermore, since each air release port 50 has an elongated shape inclined downward toward the rear in a side view of the vehicle body, this configuration ensures a sufficient air release port area and enables the airflow released through each air release port 50 to smoothly flow rearward. Furthermore, an inner edge of each upper surface 90 in the vehicle width direction is provided with an engagement flange, not shown, on which the engagement claws 53 and 55 are formed for engagement with the base cowl 41. The engagement flange is hidden within the base cowl 41 and is invisible from the outside once the outer cover 42 is engaged with the base cowl 41.

Furthermore, the base cowl 41 has an inclined surface 62 that faces the front upper surface 51 and the rear upper surface 52 at a predetermined angle. The present embodiment has a portion where the front upper surface 51, the rear upper surface 52, and the inclined surface 62 form an acute angle. Furthermore, the front upper surface 51 and the rear upper surface 52 form an obtuse angle in a side view. This configuration enables the released airflow to easily flow between the upper surface 90 of each outer cover 42 and the inclined surface 62 of the corresponding base cowl 41, thereby further enhancing the effect of streamlining the vehicle-induced airflow W.

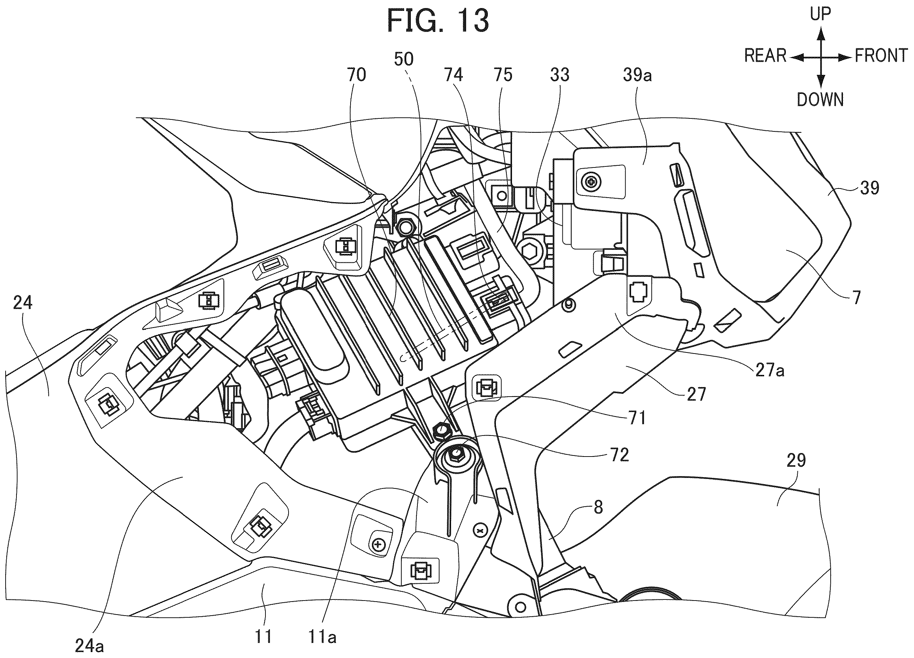

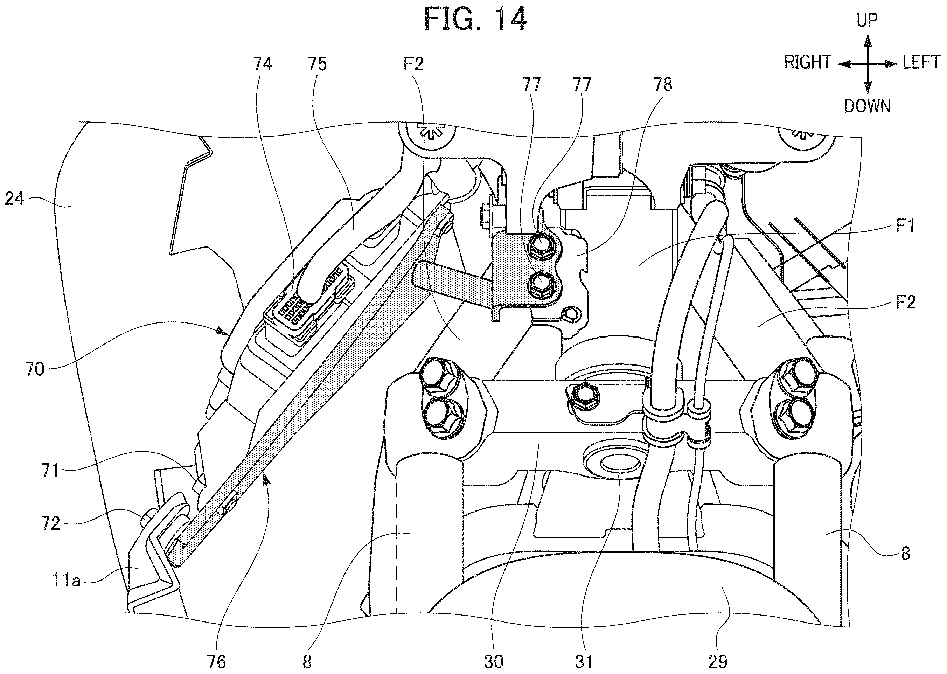

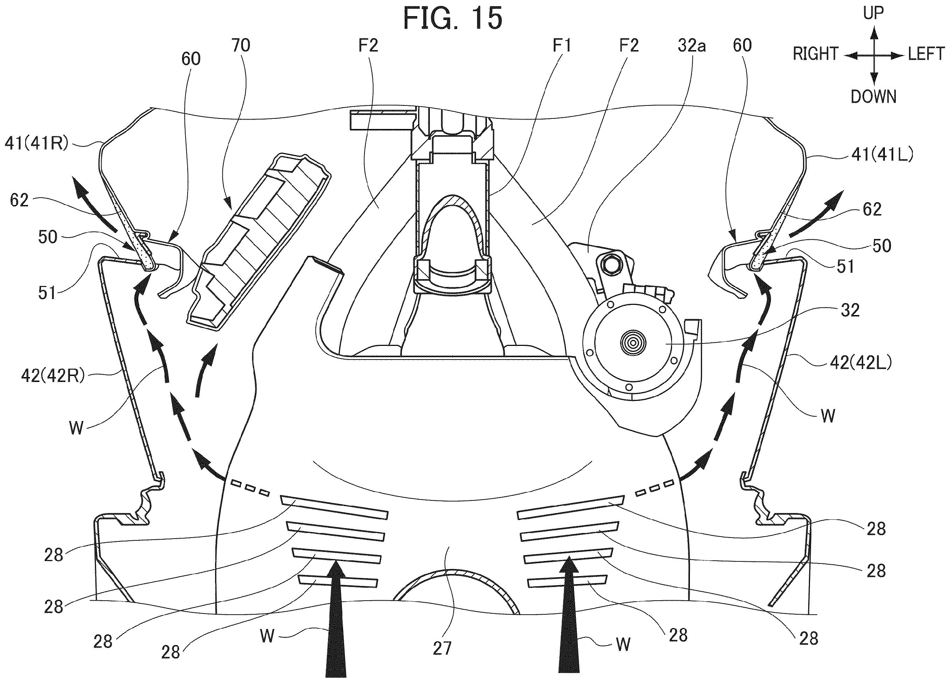

FIG. 13 is a partially enlarged right side view of the motorcycle 1 with the leg shield 40 removed. FIG. 14 is a front view showing a structure of the head pipe F1 and other components therearound. FIG. 15 is an explanatory diagram showing the flow of the vehicle-induced airflow W till the release thereof through the air release ports 50. The same reference numerals as mentioned above indicate the same or equivalent elements. A controller 70, which is an electrical component, is provided inside the leg shield 40R on the right side in the vehicle width direction.

The leg shield 40R is supported on a first flange 24a provided on an edge of the straddle member 24, a second flange 11a provided on an edge of the side panel 11, a third flange 27a provided on an edge of the lower fender 27, and a fourth flange 39a provided on an edge of the front center cowl 39. The air release port 50 provided in the outer cover 42 of the leg shield 40R is located outward of the controller 70 in the vehicle width direction.

Referring to FIG. 14, the controller 70 is fixed to a support plate 76 (indicated by dotted hatching in FIG. 14) using a fastening member 71 such as a bolt. A connector 74 connected to a harness 75 is mounted on a front portion of the controller 70. The upper side of the support plate 76 is fixed to a boss 78 provided on a right side surface of the head pipe F1 using fastening members 77, and the lower side of the support plate 76 is fixed to the second flange 11a using a fastening member 72. Thus, the controller 70 is held at an angle so that the inner side thereof in the vehicle width direction is located above the outer side thereof in the vehicle width direction in a front view of the vehicle body.

Referring to FIG. 14, a pair of left and right main frames F2 are provided rearward of the lower fender 27 and extend downward from a rear portion of the head pipe F1. The horn 32 is supported on a stay 32a provided on the main frame F2 on the left side in the vehicle width direction. The vehicle-induced airflow W introduced through the air introduction ports 28 of the lower fender 27 flows upward through the inside of the leg shields 40 and is released through the air release ports 50 formed in the outer covers 42. The streamlining plates 60 on the base cowls 41 are located outward of the lower fender 27 in the vehicle width direction. The vehicle-induced airflow W introduced through the left and right air introduction ports 28 flows upward on each side after being directed forward and outward in the vehicle width direction. The vehicle-induced airflow W that has reached each streamlining plate 60 is directed outward in the vehicle width direction first, and then directed to the inside of the streamlining plate 60. Thus, this configuration releases the vehicle-induced airflow W after streamlining the vehicle-induced airflow W using the streamlining plates 60. Consequently, the intended release amount can be achieved.

The controller 70, which is a heat-generating component, is provided rearward of the lower fender 27 and inward of the leg shield 40R on the right side in the vehicle width direction in a side view of the vehicle body. Furthermore, the air release ports 50 are provided outward of the controller 70 in the vehicle width direction at positions overlapping with the controller 70 in a side view. This configuration allows the controller 70 to be located on the air release path of the vehicle-induced airflow W on the right side in the vehicle width direction, and thus effectively cooled by the vehicle-induced airflow W.

As described above, a motorcycle 1 having a vehicle-induced airflow releasing structure according to the present invention includes: a front wheel WF, leg shields 40 each provided on a side portion of a vehicle body at a position above and rearward of the front wheel WF; and air release ports 50 configured to release vehicle-induced airflow W introduced into the inside of the leg shields 40. Each of the leg shields 40 includes a streamlining plate 60 extending along an edge of a corresponding one of the air release ports 50 at a position inward of the air release port 50 in the vehicle width direction. With the streamlining plates 60 extending along the edges of the air release ports 50, the vehicle-induced airflow W flowing toward the air release ports 50 is released after changing direction by hitting the streamlining plates 60, and then flowing around the streamlining plates 60. This configuration therefore makes it possible to suitably control the amount of airflow to be released through the air release ports 50 as compared to a configuration having no streamlining plates 60, improving the drivability during travel while reducing the amount of released airflow that hits the occupant's legs.

The form of the motorcycle, the shapes and the structures of the leg shields, the base cowls, and the outer covers, the shape and the arrangement of the air release ports, the number of air release ports, the shape and the structure of the lower fender, the shape and the arrangement of the air introduction ports, the number of air introduction ports, the angle formed between the upper surface of each outer cover and the inclined surface of the corresponding base cowl, the type of the electrical component, and the like are not limited to the foregoing embodiment, and may be subject to various modifications. In the foregoing embodiment, each streamlining plate is integrated with the corresponding base cowl. However, no particular limitations are placed on the position and the shape of the streamlining plates, as long as the configuration thereof enables adjustment of the amount of vehicle-induced airflow to be released through the air release ports. For example, each streamlining plate may have a shape extending inward in the vehicle width direction from the corresponding base cowl, and then extending upward to cover the corresponding air release port. Alternatively, the streamlining plates may be provided on the outer covers. Alternatively, the streamlining plates may be provided on both the base cowls and the outer covers. Furthermore, each streamlining plate may include a lattice-shaped portion or have a through hole to adjust the amount of airflow to be released. The vehicle-induced airflow releasing structure according to the present embodiment is not limited to being applied to motorcycles but can be applied to other saddled vehicles such as motor tricycles and quadricycles.

### EXPLANATION OF REFERENCE NUMERALS

- 1:: Motorcycle (saddled vehicle)
- 27:: Lower fender
- 28:: Air introduction port
- 40:: Leg shield
- 41:: Base cowl
- 42:: Outer cover
- 50:: Air release port
- 50f:: Front end of air release port
- 50r:: Rear end of air release port
- 51:: Front upper surface of outer cover
- 52:: Rear upper surface of outer cover
- 60:: Streamlining plate
- 60a:: Upper wall of streamlining plate
- 60b:: Side wall of streamlining plate
- 60c:: Lower wall of streamlining plate
- 60f:: Front end of streamlining plate
- 60r:: Rear end of streamlining plate
- 62:: Inclined surface of base cowl
- 70:: Controller (electrical component)
- 80:: Recess
- 80f:: Front edge of recess
- 80r:: Rear edge of recess
- 80u:: Inner edge of recess in vehicle width direction
- 80s:: Outer edge of recess in vehicle width direction
- 90:: Upper surface of outer cover
- WF:: Front wheel
- W:: Vehicle-induced airflow

## Claims

1. A saddled vehicle (1) comprising:
a front wheel (WF);
leg shields (40) each provided on a side portion of a vehicle body at a position above and rearward of the front wheel (WF); and
air release ports (50) configured to release vehicle-induced airflow (W) introduced into the inside of the leg shields (40),
each of the leg shields (40) including a streamlining plate (60) extending along an edge of a corresponding one of the air release ports (50) at a position inward of the air release port (50) in a vehicle width direction.

2. The saddled vehicle according to claim 1, wherein
each of the leg shields (40) includes a base cowl (41) and an outer cover (42) mounted on an outer side of the base cowl (41) in the vehicle width direction,
the streamlining plates (60) are provided on the respective base cowls (41), and
the air release ports (50) are provided in the respective outer covers (42).

3. The saddled vehicle according to claim 1 or 2, wherein
each of the streamlining plates (60) includes an upper wall (60a) extending in a front-rear direction and extending inward in the vehicle width direction from an upper edge of the corresponding air release port (50), a side wall (60b) extending downward from an end of the upper wall (60a), and a lower wall (60c) extending outward in the vehicle width direction from an end of the side wall (60b),
an end of the lower wall (60c) and a corresponding one of the base cowls (41) are spaced apart from each other,
a front end (60f) of each streamlining plate (60) extends further forward than a front end (50f) of the corresponding air release port (50), and
a rear end (60r) of each streamlining plate (60) extends further rearward than a rear end (50r) of the corresponding air release port (50).

4. The saddled vehicle according to claim 1 or 2, further comprising
a lower fender (27) located inward of the base cowls (41) in the vehicle width direction and covering a rear portion of the front wheel (WF), wherein
the lower fender (27) has air introduction ports (28) through which the vehicle-induced airflow (W) is introduced into the inside of the leg shields (40),
each of the air release ports (50) is provided at a position above and forward of the air introduction ports (28) in a side view of the vehicle body, and
each of the streamlining plates (60) and the lower fender (27) are spaced apart from each other in the vehicle width direction.

5. The saddled vehicle according to claim 1 or 2, wherein
an upper surface (90) of each outer cover (42) has a recess (80) recessed inward in the vehicle width direction,
each of the air release ports (50) is formed in a corresponding one of the recesses (80) and has an elongated shape inclined downward toward the rear in a side view of the vehicle body, and
each of the air release ports (50) is provided at a position overlapping with the corresponding base cowl (41) in a plan view of the vehicle body.

6. The saddled vehicle according to claim 5, wherein
each of the recesses (80) has a trapezoidal shape defined by four edges including a front edge (80f), a rear edge (80r) longer than the front edge (80f), an inner edge (80u) in the vehicle width direction, and an outer edge (80s) in the vehicle width direction, and
each of the air release ports (50) is provided at a position toward a corresponding one of the inner edges (80u) in the vehicle width direction and has an elongated shape extending in a front-rear direction.

7. The saddled vehicle according to claim 4, further comprising
an electrical component (70) provided inside one of the leg shields (40) at a position rearward of the lower fender (27) in a side view of the vehicle body, and
at least a portion of the electrical component (70) overlaps with the air release ports (50) in a side view of the vehicle body.

8. The saddled vehicle according to claim 4, wherein
an upper surface (90) of each outer cover (42) includes a front upper surface (51), which is inclined downward toward the rear in a side view of the vehicle body, and a rear upper surface (52), which is connected to a rear end of the front upper surface (51) and extends rearward, and
each of the base cowls (41) has an inclined surface (62) that faces the front upper surface (51) and the rear upper surface (52) of a corresponding one of the outer covers (42) at a predetermined angle.
